Europäisches Patentamt

(19) European Patent Office

Office européen des brevets

(11) Publication number: **0 096 239**
**B1**

(12) **EUROPEAN PATENT SPECIFICATION**

(45) Date of publication of patent specification: **16.12.87**

(21) Application number: **83104733.7**

(22) Date of filing: **13.05.83**

(51) Int. Cl.⁴: **B 01 D 13/02**, D 01 F 13/02, C 01 D 5/00

(54) **Electrodialytic water splitting process for conversion of alkali metal sulfate values derived from spent rayon spin baths.**

(30) Priority: **01.06.82 US 383879**
**02.05.83 US 487651**

(43) Date of publication of application:
**21.12.83 Bulletin 83/51**

(45) Publication of the grant of the patent:
**16.12.87 Bulletin 87/51**

(84) Designated Contracting States:
**AT BE DE FR GB IT NL SE**

(56) References cited:
**EP-A-0 032 007**
**FR-A-1 324 549**
**US-A-2 521 367**
**US-A-2 829 095**
**US-A-4 107 015**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Mani, Krishnamurthy N.**
**c/o Allied Corporation P.O. Box 2245R**
**Morristown, NJ 07960 (US)**
Inventor: **Chlanda, Frederick P.**
**c/o Allied Corporation P.O. Box 2245R**
**Morristown, NJ 07960 (US)**

(74) Representative: **Baillie, Iain Cameron et al**
**c/o Langner Parry Isartorplatz 5**
**D-8000 München 2 (DE)**

Courier Press, Leamington Spa, England.

**Description**

This invention relates to processes for conversion of alkali metal sulfate values, especially sodium or potassium sulfate, contained in spent rayon spin bath liquors into alkali metal hydroxide and alkali metal sulfate/sulfuric acid by use of two- and three-compartment electrodialytic water splitting.

Rayon preparation is a well-developed technology. See for example, R. L. Mitch et al. "Rayon" in *Encyclopedia of Polymer Science and Technology*, Vol. 79, Inter-sciences Publishers (Div. of J. Whiley) 1969, pp. 810—847. Regeneration of alkali metal sulfate values, especially $Na_2SO_4$ or $K_2SO_4/H_2SO_4$ from spent rayon spin baths is an energy intensive process and requires purification steps and make-up sulfuric acid. Due to increasing energy costs, an improvement in the efficiency of processes for regeneration of alkali metal sulfate values derived from rayon spin baths would be beneficial.

Electrodialytic water splitting of aqueous neutral salts, in two-compartment cells to form the corresponding acid and base is disclosed in C.A., Vol. 53, 11070b (1959) (Oda et al.) Electrodialytic water splitting processes, in two-compartment bipolar membrane cells, for conversion of waste sulfate containing streams are disclosed in U.S. Patent Nos. 4,082,835 and 4,107,015 (Chlanda et al.)

EP—A—0,032,007 discloses a process for regenerating rayon spin bath material comprising alkali metal sulfate and sulfuric acid and generating alkali metal hydroxide from a spent rayon spin bath liquor comprising alkali metal sulfate. However the process disclosed in this publication is an electrolytic process, in which hydrogen and oxygen gases are generated.

It is an object of the present invention to provide electrodialytic water splitting processes for conversion of aqueous alkali metal sulfate values obtained from rayon spin bath liquors into alkali metal hydroxide and alkali metal sulfate/sulfuric acid.

The process of the present invention is characterised by being an electrodialytic process comprising the steps of:

a) feeding aqueous solution of said alkali metal sulfate to each acid compartment of an electrodialytic water splitter, the electrodialytic water splitter comprising at least one acid compartment and at least one base compartment;

b) feeding liquid comprising water to each base compartment of the electrodialytic water splitter;

c) passing current through the electrodialytic water splitter to produce, in each acid compartment, a reaction product comprising said alkali metal sulfate and sulfuric acid and, in each base compartment, a reaction liquid comprising said alkali metal hydroxide; and,

d) recovering at least a portion of the reaction product from the electrodialytic water splitter.

Said aqueous solution may be said spent bath liquor. Alternatively however, in the case in which said alkali metal sulfate is sodium sulfate; prior to said steps a) to d) spent rayon spin bath liquor may be treated to produce crystallized glauber salt therefrom and the glauber salt dissolved to form said aqueous solution the concentration of alkali metal sulfate in the aqueous solution being between 15% and 32% of the aqueous solution.

In the latter case, the electrodialytic water splitter is preferably a three-compartment water splitter comprising alternating base, acid and salt compartments, the process further comprising the steps of:

A neutralizing spent rayon spin bath liquor;

B filtering the neutralized liquor to obtain an aqueous product containing between 10 and 32 weight percent alkali metal sulfate and being substantially free of organic and inorganic impurities; and

C feeding the aqueous product to each salt compartment of the three-compartment electrodialytic water splitter.

EP—A—0,032,007 also discloses that bipolar electrodes can be used in an electrolytic process and that a stack of bipolar cells is preferred.

In a preferred process in accordance with the present invention, the electrodialytic water splitter is a two-compartment electrodialytic water splitter comprised of a plurality of unit cells defining alternating acid and base compartments, each unit cell comprising both cation and bipolar membranes.

Spent rayon spin bath liquors from rayon production, e.g., from the viscose process normally contain at least 5 weight percent up to saturation of alkali metal sulfate, typically sodium or potassium sulfate as well as organic and divalent metal cation impurities that were used as spinning additives or modifiers to produce higher spinning speeds. While the present invention contemplates purifying the spent rayon bath liquors such as by neutralization and filtration to provide alkali metal sulfate, substantially free of organic and divalent metal cation impurities, that is then fed to the acid compartment of a two-compartment and the salt compartment of a three-compartment water splitter, it is an advantageous feature of the present invention that the spent rayon spin bath liquors containing organic and divalent metal impurities may be fed to the acid compartment of a three-compartment water splitter without purification or pretreatment. It is another preferred feature of the present invention that an average temperature in the two-compartment water splitters is maintained at a value of at least 40°C, preferably at least 45°C and more preferably at least 45°C in each compartment of the water splitters; under these conditions it has been found that the two-compartment water splitters operate with improved current efficiency. No upper limit in temperature, other than the decomposition temperature of the membranes or boiling point of the solution, has been found.

2

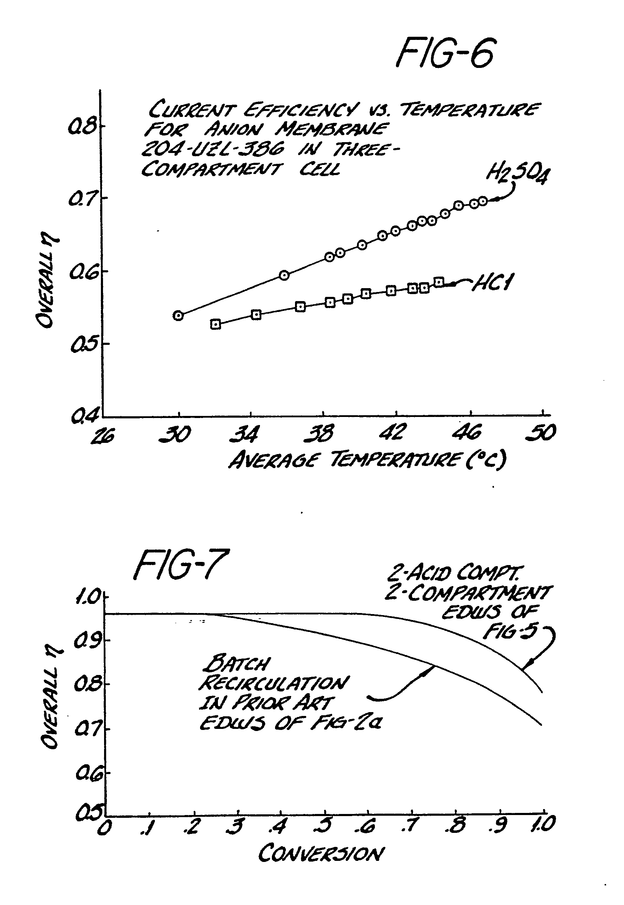

Surprisingly the improvement in current efficiency for the two- and three-compartment electrodialytic water splitters maintained at a temperature of at least 40°C is unique for aqueous alkali metal sulfate streams. Only a minor improvement in current efficiency was observed for two-compartment electrodialytic water splitting of aqueous alkali metal chloride under similar operating conditions, e.g., current density, specific membranes as temperature of water splitter was increased from 30° to 45°C (See Figure 6).

A three-compartment water splitter used in the process of the present invention preferably incorporates a plurality of cation, bipolar and anion membranes arranged in an alternating fashion between two electrodes to provide alternating base, acid and salt compartments that form an electrodialytic stack.

A two-compartment water splitter used in the process of the present invention may be any of the devices described in U.S. Patent 4,082,835 to Chlanda et al. (1979) for electrodialytic water splitting of sodium bisulfite and similar salts.

The preferred two-compartment water splitter incorporates a plurality of cation and bipolar ion exchange membranes arranged in an alternating fashion between two electrodes thus forming an electrodialysis stack. The construction of electrodialysis stacks is well known and, for example, units are available commercially from Asahi Glass Co., 1—2, Marunochi 2-Chome, Chiyoda-Ku, Tokyo, Japan; Ionics, Inc., Watertown, Massachusetts and other commercial sources. In general, stacks which are suitable for electrolyte concentration such as the Ashai Model CU-IV, may be used for the water splitter. However, the membrane used therein must be of a kind adaptable to water splitting.

The two- and three-compartment water splitters may employ any suitable bipolar membranes, that can be of the type described, for example, in U.S. Patent 2,829,095 to Oda et al., which has reference to water splitting generally or in U.S. Patent No. 4,024,043 (single film bipolar membrane) or in U.S. Patent 4,116,889 (cast bipolar membrane) or any other type which effectively converts water into hydrogen and hydroxyl ions.

The operation of the two-compartment water splitter is similar to that described in U.S. Patent Nos. 4,082,835 and 4,107,015, with modifications in feed solution composition as described hereinafter. (See Figure 2a).

The operation of the three-compartment water splitter is further described hereinafter by reference to Figure 2b.

The aqueous alkali metal sulfate solution fed to the compartments of two- and three-compartment water splitters is preferably sodium sulfate or potassium sulfate, more preferably sodium sulfate, containing sulfuric acid, but may also be lithium sulfate or even, conceivably, other alkali metal sulfates or mixtures thereof.

A particularly useful solution for the acid compartments of the three-compartment cell is spent bath liquor obtained directly from rayon spin bath, without pretreatment to remove organic and divalent metal cation impurities and comprised of 2 weight percent up to saturation of sodium or potassium sulfate, at least 5 weight percent sulfuric acid, and organic and divalent metal ion impurities. While the pH of the solution fed to the acid compartment of the three- and two-compartment water splitters is conveniently less than 7, preferably 1 to 4, the precise pH of the solution fed is not critical. However, when more than 5 weight percent sulfuric acid is present in the alkali metal sulfate solution, the use of three-compartment water splitting is preferred. The usual concentration of alkali metal sulfate in the spent rayon spin bath liquors fed to the acid compartment of a three-compartment water splitter may be as low as 5 weight percent up to the saturation concentration of alkali metal sulfate and contain 0—15 weight percent of sulfuric acid; preferably, the feed solution is between 10 weight percent (more preferably 25 weight percent) and the saturation concentration (32 weight percent for sodium sulfate) of alkali metal sulfate. The acidified salt solution produced in the acid compartment of a three-compartment cell and recycled to a rayon spin bath contains alkali metal sulfate and an enriched amount of sulfuric compared to the solution feed to the acid compartment three-compartment cell which is normally 5 to 22 weight percent in alkali metal sulfate and 6—8 weight percent in $H_2SO_4$. Typically, the concentration of $H_2SO_4$ in the solution recovered from the acid compartment is 8—14, preferably 9—12 weight percent in $H_2SO_4$.

The solution fed to the salt compartment of the three compartment water splitter comprises alkali metal sulfate values derived from spent rayon spin baths and purified by standard procedures used for removal of organic and divalent metal impurities. Preferably sodium sulfate or potassium sulfate, more preferably sodium sulfate, but may also be lithium sulfate or even conceivably other alkali metal sulfates, or mixtures thereof. A particularly convenient feed for the salt compartment of the three-compartment cell is crystallized glauber salt ($Na_2SO_4 \cdot 10H_2O$) obtained as a by-product from spent rayon spin bath liquors. Preferably, the feed solution for the salt compartment is treated to be substantially free of organic impurities, divalent metal cations (e.g., $Ca^{+2}$, $Mg^{+2}$, $Zn^{+2}$, etc.) that will migrate through and/or clog the cation membrane. The pH of the salt feed solution is not critical, but preferably is 7.

The concentration of alkali metal sulfate in the solution fed to the salt compartment of the three-compartment cell may be as low as 5 weight percent up to saturation in alkali metal sulfate. Preferably, a 15—32 (saturation) weight percent alkali metal sulfate solution is fed to the salt compartment.

The solution fed to the acid compartment of the two-compartment water splitter may conveniently be 15—32 weight percent alkali metal sulfate values derived from spent rayon spin baths. Typically 30 weight percent sodium sulfate solution containing 0 to 5 weight percent sulfuric acid and obtained by pretreatment, such as forming an aqueous solution of glauber's salt derived from the spent rayon spin bath liquors is fed to the acid compartment of a two-compartment cell.

The liquid fed to the base compartments of two- and three-compartment water splitters may be water alone, or it may be water with any of a variety of electrolytes in it. Preferably, this liquid is neutral or basic (pH 7—14) and more preferably it is aqueous sodium hydroxide of a concentration between 1 and 50 weight percent (more preferably between 5 and 25 weight percent). This concentration (the actual feed to the base compartments) may be achieved by recycle, staging or a combination thereof as described in more detail below to provide an aqueous sodium hydroxide concentration in the range of 5 to 50 weight percent.

The current passed through the water splitter in conventional fashion is direct current of a voltage dictated by design and performance characteristics readily apparent to the skilled artisan and/or determined by routine experimentation. Generally, current densities in the range of 50—150 mamp/cm$^2$ are conveniently used. Current densities of 100—150 mamp/cm$^2$ are especially convenient.

The cation membranes useful in the process of the present invention may be weakly acidic or strongly acidic cation permselective membranes. Particularly useful cation membranes are Dupont's Nafion® acidic fluorocarbon membranes, especially Nafion® 110, 901 and 324 but other commercially available cation membrane may be used.

Among the anion membranes found useful for the three-compartment cells used in the present invention are commercially available strongly, mildly or weakly basic anion permselective membranes such as are available from Ionics Inc., Watertown, Massachusetts, and sold as Ionics 204—UZL—386 or from Asahi Glass Co., under the trade name Selemion® AMV or ASV anion permselective membranes but other commercially available anion membranes may be used.

The present invention may be better understood by reference to the description of the Figures by way of example only, of which:

Figure 1 illustrates schematically a three-compartment water splitter wherein the operation of the process of the broadest aspect of the present invention was tested;

Figure 2a illustrates schematically the ion transfer in a two-compartment bipolar membrane water splitter;

Figure 2b illustrates schematically the ion transfer in a three-compartment bipolar membrane water splitter;

Figure 2c illustrates schematically an alternative embodiment of the present invention using a three acid stage, two-compartment electrodialytic water splitter;

Figure 3 illustrates schematically a preferred embodiment of the present invention using a two-compartment electrodialytic water splitter;

Figure 4 illustrates schematically another preferred embodiment of the present invention using a three-compartment electrodialytic water splitter;

Figure 5 illustrates schematically still another preferred embodiment of the present invention operated in two acid stage, two-compartment electrodialytic water splitter;

Figure 6 graphically compares the improvement in current efficiency for electrodialytic water splitting of aqueous sulfate streams operated in accordance with the present invention to the current efficiency for electrodialytic water splitting of aqueous chloride streams, and

Figure 7 graphically illustrates a comparison of the overall current efficiency versus percent conversion for the two acid stage, two-compartment multichamber electrodialytic water splitter illustrated in Figure 5 and for a prior art two-compartment electrodialytic water splitter illustrated in Figure 2a operated in infinite stage, batch circulation mode.

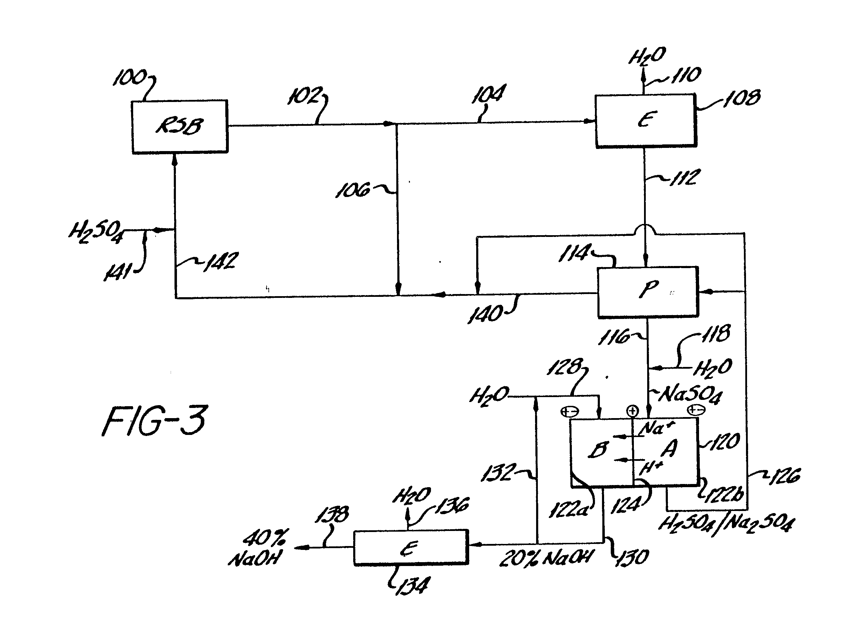

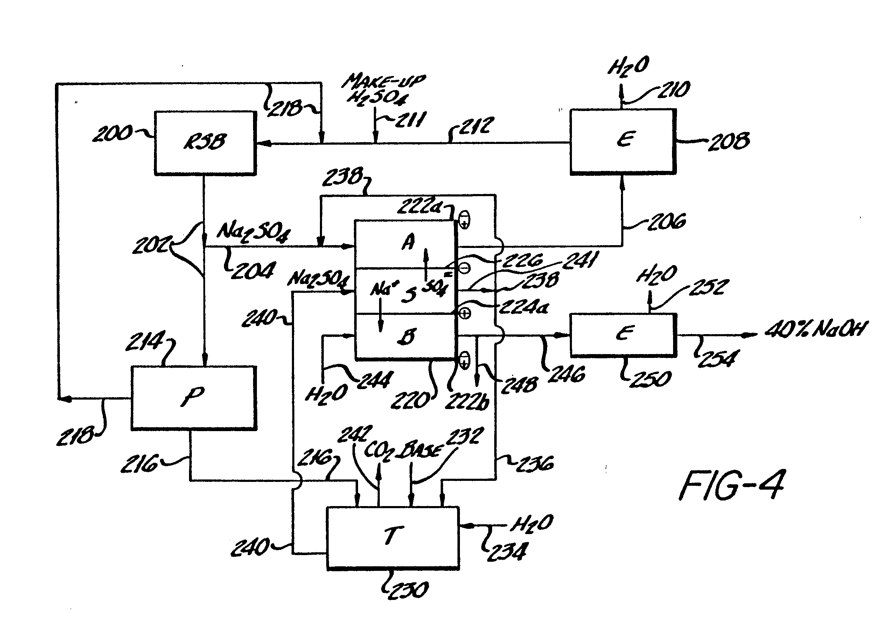

Figure 3 schematically illustrates a preferred embodiment of the process of the present invention practiced in a two-compartment electrodialytic water splitter. Aqueous alkali sulfate values are removed from rayon spin bath 100 via line 102. Typically, the spent rayon spin bath liquor in line 102 has a composition of 2 percent up to the saturation point of sodium sulfate, 0 to 15 weight percent sulfuric acid, and contains organic and inorganic impurities, usually divalent metal cations (spin bath additives). While sodium sulfate is used in the description which follows, it is to be understood that other alkali metal cations, for example, potassium, or even lithium or mixtures thereof, are considered within the scope of the present invention. The pH of the spent rayon spin bath liquor in line 102 is not critical and may be neutral, acidic, and even basic. At least a portion of the sodium sulfate values in line 102 is forwarded via line 104 to an evaporator 108 for water removal. Water is removed via line 110 and concentrated sodium sulfate/sulfuric acid, typically 10—32 weight percent sodium sulfate, and 0—12 weight percent sulfuric acid are removed from evaporator 108 via line 112 to purification zone 114 for removal of organic impurities and divalent metal cations which may interfere with the operation of the electrodialytic water splitter 120. Although the purification step may be pH adjustment and filtration or ion exchange, typically a purification involves an evaporative crystallization to form glauber salt (Na$_2$SO$_4 \cdot$ 10H$_2$O) which is removed via line 116 and a mother liquor enriched in sulfuric acid and depleted in sodium sulfate which is removed from the purification zone 114 via line 140 and returned to the spin bath 100 via line 140 and line 142. In addition, sulfuric acid may be added in line 141 to the aqueous sodium sulfate/sulfuric acid solution in line 142 when make-up sulfuric acid is required. At least a portion of the spent rayon spin bath liquor in 102 is forwarded via line 106 for combination with the sodium sulfate-depleted, sulfuric acid-enriched mother liquor removed from purification zone 114. Water is added to the glauber salt in line 116 via line 118 in an amount sufficient to form an aqueous solution typically containing 2 up to the saturation point of sodium sulfate. For solutions containing more than 5 weight percent sulfuric acid, three-compartment water splitting as illustrated in Figure 4 hereinbelow may be preferable. The aqueous sodium sulfate solution in line 116 is fed to the acid compartment A of the two-compartment electrodialytic water splitter 120, which incorporates a plurality of unit cells each comprised of one bipolar membrane 122a and one cation permselective membrane 124 thereby forming alternating base and acid compartments positioned between two electrodes. Under direct applied current, the sodium sulfate in the acid compartment A is enriched in sulfuric acid by hydrogen ions generated at the cation face of bipolar membrane 122b. Sodium cations and smaller amounts of hydrogen ions migrate towards the cathode from acid compartment A through cation permselective membrane 124 into the base compartment B. A sodium sulfate solution enriched in sulfuric acid, typically between 5 up to the saturation point of sodium sulfate and 5 to 15 weight percent sulfuric acid is removed from acid compartment A via line 126 and forwarded to purification zone 114 for additional glauber's salt removal or to spin bath 110 via line 140. Water in line 128 is fed to base compartment B of the two-compartment water splitter 120. Hydroxide ions generated at the anion face of the bipolar membrane 122a combine in base compartment B with the sodium ions that migrate from the acid compartment through cation membrane 124 into the base compartment to form sodium hydroxide, typically 10—20 weight percent sodium hydroxide which is removed from the base compartment B via line 130. At least a portion of the sodium hydroxide in line 130 may be recycled to line 128 via line 132. Another portion of the sodium hydroxide in line 130 may be fed to evaporator 134 for concentration to 40 to 50 weight percent sodium hydroxide which is removed via line 138. Typically, the composition of the sodium hydroxide in line 130 may be of any strength suitable for dissolving cellulose material used in rayon production.

Figure 4 schematically illustrates another preferred embodiment of the present invention which may be practiced in a three-compartment electrodialytic water splitter. Spent rayon spin bath liquor is removed from rayon spin bath 200 via line 202. Typically the composition of the spent rayon spin bath liquor in line 202 is 15 weight percent up to the saturation point of sodium sulfate and 0 to 15 percent, preferably 2 to 10 weight percent sulfuric acid, and containing organic and divalent metal cation impurities. At least a portion of the spent rayon spin bath liquor in line 202 is forwarded via line 204 to the acid compartment of the three-compartment electrodialytic water splitter 220 comprised of alternating bipolar membranes 222a and an ion permselective membranes 226 and cation permselective membranes 224a positioned between two electrodes thereby forming alternating acid A, salt S, and base B compartments. In acid compartment A, sulfate ions migrate under the influence of applied direct current through anion permselective membrane 226 from the salt compartments S into the acid compartment A and therein combine with hydrogen ions generated at the cation face of bipolar membrane 222a. An aqueous sodium sulfate solution, enriched in sulfuric acid, is removed from the acid compartment A via line 206 and forwarded to evaporator 208 for removal of water via line 210. It is to be understood that the evaporation step may be omitted if not required to adjust the water balance in the system. If evaporator 208 is used, a more concentrated sodium sulfate/sulfuric acid solution is removed via line 212 and forwarded to the rayon spin bath 200. The remainder of the spent rayon spin bath containing sodium sulfate and sulfuric acid in line 202 is not fed to the acid compartment but fed to purification zone 214 for removal of organic and divalent metal cation impurities.

While any convenient purification step, such as pH adjustment and filtration may be used, typically an evaporative crystallization is performed in purification zone 214 to form glauber salt which is removed via line 216 and a mother liquor enriched in sulfuric acid and depleted in sodium sulfate which is removed from purification zone 214 via line 218 and forwarded to line 212 and then to the rayon spin bath 200. The glauber salt in line 216 is forwarded to the salt compartment recycle tank 230 in the form of a solid or a slurry or even an aqueous solution. To the salt recycle tank 230 an alkali metal base, typically soda ash or sodium hydroxide is added via line 232 and at least a portion of the sodium sulfate solution removed from salt compartment S which may optionally contain sulfuric acid is added via line 236 to recycle tank 230. Make-up water, if necessary, is added to tank 230 via line 234. The soda ash is added via line 232 for additional purification, for example, to remove divalent cations, such as zinc, magnesium or calcium which may interfere with the operation of the cation permselective membrane adjacent to the salt compartment S. An aqueous solution of sodium sulfate, containing 10 weight percent up to the saturation point, typically 25 weight percent up to the saturation point of sodium sulfate and insolubles is removed from recycle tank 230 via line 240 through a filter (not shown) and forwarded to salt compartment S. In salt compartment S, sodium cations migrate through the anion permselective membrane 224a from salt compartment S into base compartment B. Sulfate ions migrate from salt compartment S through anion perm-selective membrane 226 into acid compartment A. An aqueous sodium sulfate solution containing a reduced amount of sodium sulfate is removed from salt compartment S via line 241. The pH of the sodium sulfate solution in line 241 may be acidic, basic, or neutral. When the sodium sulfate solution in line 241 is acidic, at least a portion may be forwarded via line 238 to the sodium sulfate solution fed to the acid compartment A via line 204. The remainder of the acidic sodium sulfate solution in line 241 may be forwarded via line 236 to recycle tank 230. Water in the line 244 is fed to the base compartment B. In the base compartment B, sodium ions that migrate from the salt compartments through the cation permselective membrane 224a combine with hydroxide ions introduced at the anion face of bipolar membrane 222b to form sodium hydroxide, typically 10—20 weight percent sodium hydroxide which is removed from base compartment B via line 246. The composition of the sodium hydroxide solution in line 246 is not critical and any concentration suitable for dissolving cellulose material used in rayon production may be generated. At least a portion of the sodium hydroxide solution in line 246 may be removed via line 248 for recycle to line 244, for addition to the recycle tank 230 via line 236 and the remainder forwarded via line 246 to evaporator 250 for removal of water via line 252 and formation of a 40 to 50 weight percent sodium hydroxide solution removed from evaporator 250 via line 254.

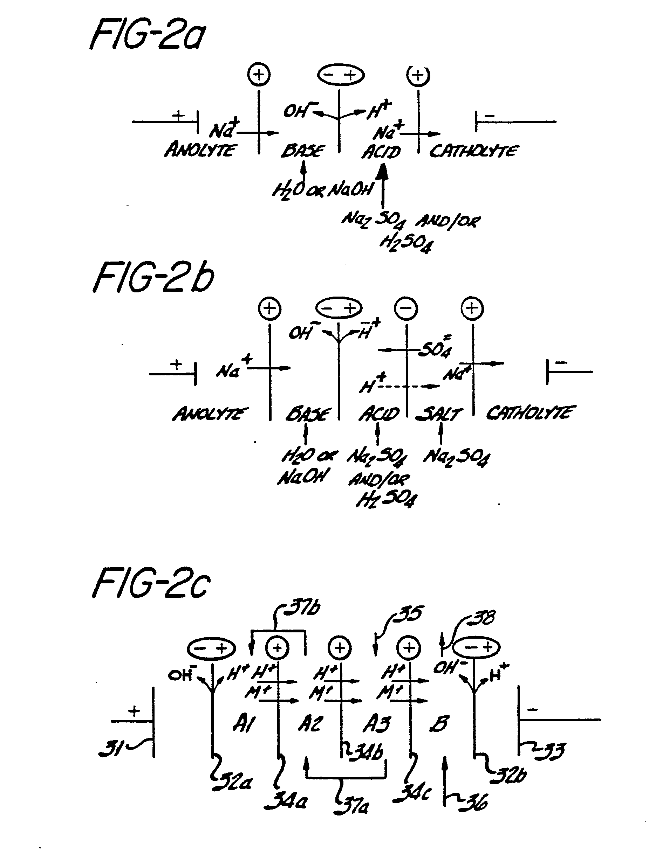

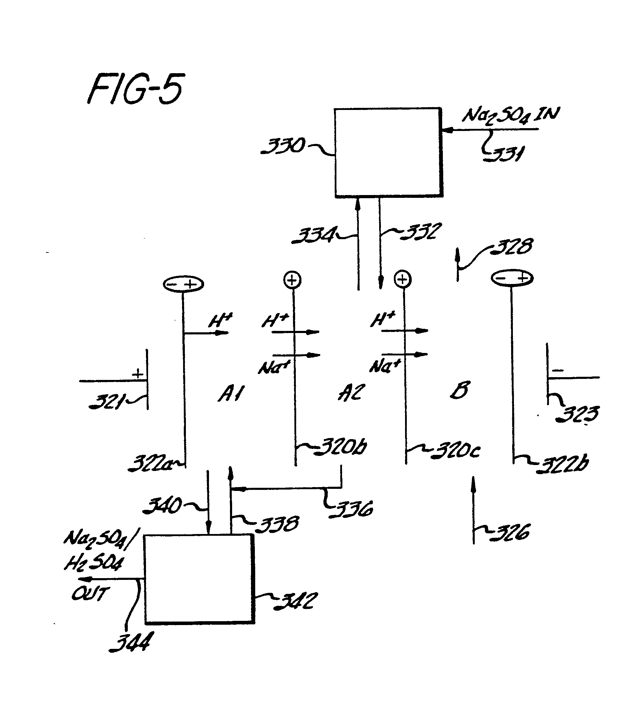

The present invention may be conveniently operated with a two- or three-compartment electrodialytic water splitter. If a three-compartment electrodialytic water splitter is used, at least a portion of and optionally all of the output of the salt compartment would be introduced into the acid compartment such as illustrated in Figure 4. If the two-compartment electrodialytic water splitter is to be employed, one of the two-compartment electrodialytic water splitters shown in Figures 2a, 2c, or 5 may be employed. While the two-compartment electrodialytic water splitter illustrated in Figure 2a may be sufficient under normal conditions, that is for producing less than a 25—50% conversion of alkali metal sulfate for example, 1 molar $Na_2SO_4$ sulfate into 0.25—0.50 molar $NaHSO_4$/0.75—0.50 molar $Na_2SO_4$, for higher conversions, that is conversions above 25—50%, it may be advisable to use one of the alternative embodiments of the two-compartment water splitter illustrated in Figures 2c and 5. The three acid stage two-compartment electrodialytic water splitter illustrated in Figure 2c incorporates a plurality of unit cells each comprised of one bipolar membrane, 32a, and two substantially non-porous, water-swollen cation or neutral membranes 34a, 34b, and a cation permselective membrane 34c, thereby forming alternating first acid compartment $A_1$, second acid compartment $A_2$, and third acid compartment $A_3$ and base compartment B arranged in an alternating fashion between two electrodes anode 31 and cathode 33. The operation of the three stage two-compartment electrodialytic water splitter illustrated in Figure 2c is essentially as follows: a direct current is passed from anode 31 to the cathode 33. Aqueous alkali metal sulfate solution derived from spent rayon spin bath liquors in line 35 and containing for example, sodium sulfate is fed to third acid compartment $A_3$. Hydrogen ions which are introduced at the cation face of bipolar membrane 32a migrate through membranes 34a, 34b, and 34c into base compartment B and at the same time alkali metal cations such as sodium in acid compartment $A_3$ migrate through cation membrane 34c into base compartment B towards cathode 33. An aqueous sodium sulfate solution from $A_3$ which may be acidic, neutral, or basic, preferably acidic, is removed therefrom via line 37a into second acid compartment $A_2$. Hydrogen ions and sodium cations in $A_1$ migrate through cation or neutral membrane 24a into second acid compartment $A_2$. The aqueous sodium sulfate solution which may be neutral or acidic, preferably acidic, is removed from $A_2$ via line 37b and fed to acid compartment $A_1$. Hydrogen ions generated at bipolar membrane 32a are added to the aqueous sodium solution in $A_1$ and an acidified aqueous solution of sodium sulfate and sulfuric acid is withdrawn from $A_1$ via line 39a. By addition of the intermediate acid chambers $A_1$, $A_2$, and $A_3$, which are connected in series, the third acid compartment $A_3$, nearest the anion face of bipolar membrane 32b, contains the lowest acid concentration and the first acid compartment $A_1$, nearest the cation face of bipolar membrane 32a contains the highest acid concentration thereby improving the efficiency for acid generation over prior art two-compartment electrodialytic water splitter such as illustrated in Figure 2a. By decreasing the amount of migration of hydrogen ions into the base compartment, the efficiency for producing aqueous hydrogen ions and hydroxide ions is increased. A liquid comprising water, preferably also comprising dilute alkali metal hydroxide is fed via line 36 into base compartment B wherein hydroxide ions generated at the anion face of bipolar membrane 32b are added. An aqueous alkali metal hydroxide enriched solution is removed from B via line 38.

It is contemplated that the flow rates out of the different compartments may be the same or different and especially the flow rates or the net flow rates after recycle out of the base compartments may be considerably slower than that out of the acid compartments such that the hydroxide ion concentration in the product withdrawn from compartment B is substantially greater than the acid concentration in the acidified aqueous salt solution withdrawn from $A_1$. It is also contemplated that the flow rates may be adjusted such that the acid concentration in the product aqueous salt withdrawn from $A_1$ is greater than the hydroxide ion concentration in the product removed from the base compartment B.

The additional membranes 34a and 34b positioned between cation faces of the bipolar membranes 32a and the face of the cation membrane 34c thereby forming at least two acid compartments may be cation permselective or neutral membranes so long as the additional membranes are substantially non-porous (to water) and water-swollen. By the term "substantially non-porous (to water)" as used herein in reference to membranes is meant a membrane having a water or hydraulic permeability of no more than 1 mL of water/dm² of membrane area per hour at 1 meter of water pressure. Lower values of hydraulic permeability, such as $1 \times 10^{-1}$ mL/dm² per hour at 1 meter of water pressure are preferred. However, no lower limit for hydraulic permeability has been found critical to the operation of the present invention so long as the additional substantially non-porous, water-swollen cation or neutral membrane allows transport therethrough of water molecules accompanying ions under the influence of applied direct current. Use of membranes having values of hydraulic permeability greater than 1 mL/dm² per hour at 1 m of water pressure are to be avoided.

6

By the term "water-swollen" as used herein reference to membranes, is meant water-insoluble, bibulous membrane.

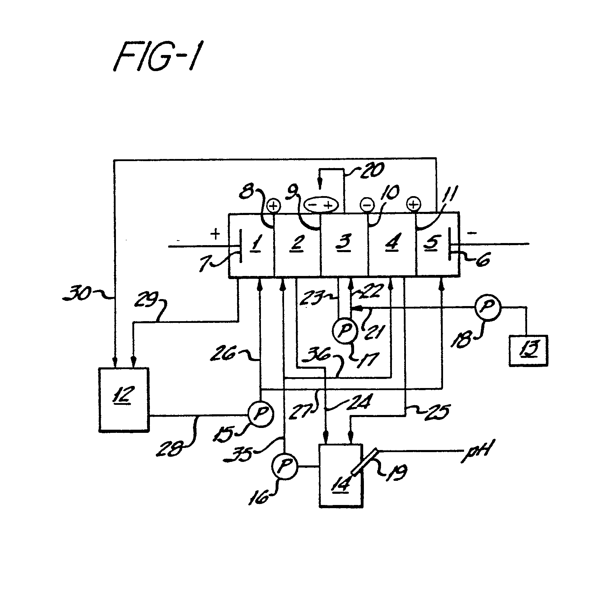

The membranes 34a and 34b separating $A_1/A_2$ and $A_2/A_3$ may be low resistance, substantially non-porous but water-swollen, weak, mildly acidic or strongly acid cation membranes such as described in reference to Figures 1, 2a, and 2b hereinbelow or may even be uncharged membranes. These uncharged or neutral membranes are those which are non-ion selective but anion and cation-permeable, and which are substantially non-porous but water-swollen. Suitable uncharged membranes may be prepared by interpolymerizing a difunctional vinyl monomer, e.g., divinyl benzene with a non-ionic hydrophilic monomer, e.g., acrylamine. Exemplary uncharged membranes include crosslinked polyvinyl alcohol and cellulose-based membranes.

The alternative embodiments of the present invention illustrated in Figure 2c incorporates three acid stages by disposing two substantially non-porous, water-swollen cation or neutral membranes in the acid compartment. Figure 5 incorporates two stages or two acid compartments by disposing only a single substantially non-porous, water-swollen cation or neutral membrane in the acid compartment. The number of stages that may be incorporated into the acid compartment is not critical and may be varied from at least two up to ten, as long as the solution of lowest acidity enters the acid compartment closest to the cathode and flows serially to the acid compartment closest to the anode, wherein a solution of highest acidity is produced. If there is only one stage, the water splitter will be an ordinary two-compartment water splitter as illustrated in Figure 2a.

Figure 5 illustrates another preferred embodiment of the present invention employing a two acid stage two-compartment electrodialytic water splitter for production of acidified aqueous sodium sulfate. Aqueous sodium sulfate is fed via line 331 to tank 330 and via line 332 to acid compartment $A_2$ formed by a face of a substantially non-porous, water-swollen cation or neutral membrane 324a and a face of a cation permselective membrane 324b. Under the influence of direct applied current through anode 321 and cathode 323, hydrogen ions and sodium ions migrate through cation permselective membrane 324b into base compartment B. An acidified aqueous sodium sulfate solution produced in acid compartment $A_2$ is removed via line 324 back to tank 330. At least a portion of the acidified sodium sulfate solution from $A_2$ is removed via line 336 to line 328 and forwarded to first acid compartment $A_1$ formed by a cation face of bipolar membrane 322a and a face of the substantially non-porous, water-swollen cation or neutral membrane 324a. The acidified sodium sulfate solution generated by hydrogen ions formed in the cation face of bipolar membrane 322a is removed from first acid compartment $A_1$ via line 340 to tank 342. At least a portion of the acidified aqueous sodium sulfate solution is removed from tank 342 via line 344. The operation of the base compartment in Figure 5 is analogous to that of the base compartments in Figures 2a and 3.

The average temperature in the two-compartment cell may be maintained at a value of at least 40°C, preferably at least 45°C, by any conventional means which is considered within the skill in the art. It is more preferable to maintain the temperature of the solution in each compartment of the two-compartment water splitter at a value of at least 40°C and still more preferable at least 45°C. The temperature maintained in the three-compartment cell is not critical to operation of the invention but normally is 35° to 55°C; temperatures above 40° are especially beneficial.

General experimental

Procedure for determining efficiency is best described by reference to Figure 1 that illustrates the laboratory apparatus used. Figure 2b schematically represents the major transport processes which occur in a three-compartment electrodialytic water splitter cell. With reference to Figure 1, the apparatus consists of a cylindrical cell constructed of fluorocarbon polymer. The cell is equipped at each end with platinum electrodes 7 and 6 connected to a DC power source. Five compartments separated by membranes were contained in the cell. These compartments were anolyte 1, base 2, acid 3, salt 4, catholyte 5. These compartments were separated by ion exchange membranes with an exposed area of 11 cm² as follows: 8 and 11 were Nafion® 110 membranes manufactured by DuPont. 9 was a bipolar membrane prepared in accordance with U.S. Patent 4,116,889. Anion exchange membrane 10 was a commercially available anion membrane manufactured by Ionics Inc. 204—UZL—386. 15, 17 and 16 were pumps used to circulate solutions through the cell. 12 was the anolyte/catholyte reservoir which was charged with 1 L of 0.5 M $Na_2SO_4$ before the experiment. This solution was circulated to the anolyte compartments as stream 26 and returned to the reservoir in stream 30 and to the catholyte compartment as stream 27 and returned to the reservoir as stream 30. The base and salt compartments 2 and 4 were fed from reservoir 14 by streams 35 and 36 and the solutions was returned to the reservoir by streams 24 and 25. Solution was circulated through the acid compartment 3 by means of pump 17. The acid stream did not contain a reservoir, the charge consisting of only the solution in the compartment, pump and associated tubing. At the highest point of the acid loop an overflow tube 20 was placed. During the experiment solution was introduced into the acid loop at a controlled rate by metering pump 18 from reservoir 13. The introduction of solution in this way and mass transport through the membranes caused an overflow from the acid compartment which was collected.

As shown in Figure 2b, when a direct current was passed through the cell $H^+$ and $OH^-$ ions were produced by the bipolar membrane. The $OH^-$ ions were introduced into the base compartment and the $H^+$

7

# 0 096 239

ions into the acid. Sulfate ions entered the acid compartment through the anion membrane causing a net formation of sulfuric acid in the acid compartment. Since the anion membrane was not perfectly selective to anions, especially at high acid concentrations, some of the $H^+$ produced in the acid was lost by migration to the salt compartment.

Since in the experimental apparatus, the outputs from the salt and base compartments were combined, the net $H^+$ production may be monitored by observing the net $OH^-$ production in the base/salt streams. The production of acid may also be monitored by the analysis of the overflow from the cell and the rate and composition of the solution metered to the cell.

Experiment 1

The cell illustrated in Figure 1 incorporating membranes described in General Experimental was used. The electrolyte reservoir 12 was charged with 1 L of 0.5M $Na_2SO_4$ and the base/salt reservoir 14 with 1.8 L of 1M $Na_2SO_4$. A heater, pH probe, and thermometer were placed in the base/salt reservoir. The base/salt solution was warmed by means of the heater and maintained at approximately 33°C throughout the experiment. The acid loop was charged with 35 g of a solution (X) of 2.0% $H_2SO_4$. Water was metered to the acid loop at a rate of 7.0 g/1000 seconds. The base/salt reservoir was brought to pH 4 by adding a small amount of 1.015N $H_2SO_4$ and a current of 1.20 amps was switched on. The base/salt reservoir pH increased as $OH^-$ was introduced. When the pH reached 7, a timer was started and a tared container was placed to collect the overflow from the acid compartment. This container was replaced at 1000 second intervals with a new container and the contents of the container analyzed for sulfuric acid by titration with standard 1N NaOH. 300 seconds after the timer was started, 5.0 mL of 1.015N $N_2SO_4$ was added to the base/salt reservoir. This caused the pH to decrease to 4. As the experiment continued, the pH rose due to $OH^-$ formation. The time at which pH 7 was reached was recorded. The efficiency for base (and therefore acid production) is calculated from the time interval between successive pH readings and the known amount of acid added during the interval by the following formula:

$$\text{Current efficiency} = \frac{\dfrac{\text{mL added} \times \text{normality} \times 96.5 \ (\text{coul/meq})}{\text{current (amps)}}}{\text{time interval (sec)}}$$

The experiment was continued for 6000 seconds with the acid collecting cups changed every 1000 seconds and 5.0 mL aliquots of 1.067 N $H_2SO_4$ were added to the base/salt reservoir 300 seconds after the pH had reached 7. The results are shown in Table I. The current efficiency was also calculated on the basis of the change in concentration of acid over the interval, the weight and concentration collected. Based on these results, the current efficiency was 0.77 at 1000 seconds, 0.69 at 3000 seconds and 0.68 at 5000 seconds. These efficiencies agree well with the base efficiencies as determined by the time intervals in view of the difficulties in determining the flows, concentrations and volumes of the acid loop. The results are reported in Table I.

8

TABLE I

| Avg time (Sec) | Ta[1] | Tbs[2] | Avg temp (°C) | | Current efficiency | %$H_2SO_4$ |
|---|---|---|---|---|---|---|
| 0 | 34.6 | 34.7 | — | — | | — |
| 535 | 33.8 | 34.3 | 34.4 | | 0.802 | 1.45 |
| 1089 | 33.3 | 33.9 | 33.8 | | 0.774 | 2.00 |
| 1663 | 33.0 | 33.8 | 33.5 | | 0.747 | 2.50 |
| 2250 | 33.0 | 33.6 | 33.4 | | 0.731 | 2.95 |
| 2859 | 33.0 | 33.5 | 33.3 | | 0.704 | 3.30 |
| 3482 | 32.9 | 33.4 | 33.2 | | 0.689 | 3.64 |
| 4125 | 33.8 | 33.5 | 33.2 | | 0.667 | 3.90 |
| 4773 | 32.8 | 33.3 | 33.1 | | 0.662 | 4.15 |
| 5436 | 32.5 | 33.2 | 33.0 | | 0.647 | 4.35 |
| 6107 | 32.4 | 33.1 | 32.8 | | 0.639 | 4.45 |

Footnotes

[1]Ta is temperature in °C in acid compartment
[2]Tbs is temperature in °C in base and salt compartments

Experiment 2

Experiment 2 was run in a manner identical to Experiment 1 except that the average temperature was 43°C, 10°C higher than in Experiment 1. The results are shown in Table II. Comparison of Experiments 1 and 2 show that 10° change in temperature may have beneficial effects on the current efficiency.

TABLE II

| Avg time (Sec) | Ta[1] | Tbs[2] | Avg temp (°C) | Current efficiency | %H$_2$SO$_4$ |
|---|---|---|---|---|---|
| 0 | 39.6 | 44.3 | — | — | — |
| 506 | 39.3 | 44.1 | 41.8 | 0.848 | 1.75 |
| 1019 | 39.5 | 44.3 | 41.8 | 0.836 | 2.25 |
| 1550 | 39.8 | 44.5 | 42.0 | 0.808 | 2.75 |
| 2096 | 39.9 | 44.6 | 42.2 | 0.786 | 3.18 |
| 2653 | 40.0 | 45.0 | 42.4 | 0.770 | 3.57 |
| 3218 | 40.1 | 45.2 | 42.6 | 0.759 | 3.92 |
| 3790 | 40.2 | 45.5 | 42.8 | 0.750 | 4.18 |
| 4350 | 40.3 | 45.6 | 42.9 | 0.766 | 4.42 |
| 4973 | 40.4 | 45.8 | 43.0 | 0.689 | 4.63 |
| 5564 | 40.6 | 46.0 | 43.2 | 0.726 | 4.80 |
| 6164 | 40.8 | 46.1 | 43.4 | 0.715 | 4.92 |

Footnotes

[1]Ta is temperature in °C in acid compartment
[2]Tbs is temperature in °C in base and salt compartments

Experiment 3

Experiment 3 was run in the cell and in a manner similar to that described in Experiment 1, except 400 mL of 0.5M Na$_2$SO$_4$ was charged to base/salt reservoir and the solutions from reservoirs 13 and 14 were recirculated (instead of metering in and withdrawing from the cell). The temperature was increased during the experiment. The results are summarized in Table III and shown graphically in Figure 6.

TABLE III

| Avg time (Sec) | Ta[1] | Tbs[2] | Avg temp (°C)[3] | Current efficiency | %H$_2$SO$_4$ |
|---|---|---|---|---|---|
| 0 | 26.7 | 27.0 | — | — | 4.02 |
| 759 | 33.5 | 33.0 | 30.0 | 0.538 | 4.04 |
| 1444 | 39.0 | 38.0 | 35.9 | 0.596 | 4.06 |
| 2102 | 38.7 | 38.0 | 38.4 | 0.620 | 4.08 |
| 2756 | 39.8 | 39.0 | 38.9 | 0.624 | 4.09 |
| 3399 | 41.3 | 40.4 | 40.1 | 0.635 | 4.11 |
| 4029 | 42.3 | 41.2 | 41.3 | 0.648 | 4.13 |
| 4652 | 43.0 | 42.0 | 42.1 | 0.655 | 4.14 |
| 5269 | 43.6 | 42.8 | 42.9 | 0.662 | 4.16 |
| 5883 | 44.2 | 43.0 | 43.4 | 0.665 | 4.17 |
| 7107 | 44.9 | 43.9 | 44.0 | 0.667 | 4.21 |
| 7712 | 45.6 | 44.2 | 44.7 | 0.675 | 4.22 |
| 8306 | 46.7 | 45.3 | 45.5 | 0.687 | 4.24 |
| 8898 | 47.2 | 45.8 | 46.3 | 0.689 | 4.25 |
| 9484 | 47.4 | 46.0 | 46.6 | 0.696 | 4.27 |

Footnotes

[1]Ta is temperature in °C in acid compartment
[2]Tbs is temperature in °C in base and salt compartments
[3]Average temperature in cell.

Experiment 4

Experiment 4 was run in a manner similar to that described in Experiment 3, except that sulfate solutions in the acid, base and salt reservoirs were replaced with 2.9 weight percent HCl and 1M NaCl, respectively and 1.000N HCl was added to the base salt reservoir. The results are summarized in Table IV and are also shown graphically in Figure 6.

Figure 6 demonstrates that while it is beneficial to raise the temperature in the sulfate system raising the temperature in the Cl$^-$ system has only a small effect that might be predicted by changes in H$^+$ and Cl$^-$ mobilities with temperature.

TABLE IV

| Avg time (Sec) | Ta[1] | Tbs[2] | Avg temp (°C)[3] | Current efficiency | %HCl |
|---|---|---|---|---|---|
| 1527 | 31.3 | 31.2 | — | — | 2.92 |
| 2292 | 33.0 | 32.8 | 32.1 | 0.526 | 2.93 |
| 3040 | 36.0 | 35.3 | 34.3 | 0.538 | 2.94 |
| 3770 | 38.3 | 37.3 | 36.7 | 0.551 | 2.95 |
| 4494 | 39.4 | 38.5 | 38.4 | 0.555 | 2.96 |
| 5211 | 40.3 | 39.2 | 39.4 | 0.561 | 2.98 |
| 5921 | 41.5 | 40.4 | 40.4 | 0.566 | 2.99 |
| 6624 | 42.7 | 42.2 | 41.7 | 0.572 | 3.00 |
| 8020 | 44.0 | 43.0 | 43.0 | 0.576 | 3.02 |
| 8718 | 44.3 | 43.0 | 43.6 | 0.576 | 3.03 |
| 9408 | 46.0 | 44.1 | 44.4 | 0.583 | 3.04 |

Footnotes

[1]Ta is temperature in °C in Acid Compartment
[2]Tbs is temperature in °C in Base and Salt Compartments
[3]Average Temperature in °C in cell.

Experiment 5

The efficiency of two compartment water splitting as a function of conversion of $Na_2SO_4$ and temperature was determined in apparatus similar to that shown in Fig. 1 except that 10 was a cation membrane prepared from partially sulfonated polystyrene and the acid compartment 3 was supplied from a 2 L reservoir charged with $Na_2SO_4/H_2SO_4$ solution whose composition changed only slowly with time. The experiments were conducted at a current of 1.20A. The efficiency for base generation was determined by adding known amounts of $H_2SO_4$ to the Base-Salt reservoir 14 and measuring the times needed for the added $H_2SO_4$ to be consumed. Since as the acidity in 3 is increased more $H^+$ is transported relative to $Na^+$ across cation membrane 10, the observed efficiency for base generation is therefore a measure of the relative transport of $H^+$ and $Na^+$ across cation membrane 10.

The results are shown in Tables Va-c. For the purposes of further calculations of system efficiencies the results have been fitted by the least squares method to quadratic equations as follows:

At 50° $\eta = .9634 - .0321 \ C - .6499 \ C^2$
At 45° $\eta = .9630 - .0374 \ C - .5879 \ C^2$
At 35° $\eta = .9702 - .1601 \ C - .5125 \ C^2$

The results show that especially at conversions above 0.5 an increased efficiency is observed at 45° and 50° compared to 35°. Similar results are expected with other cation membranes.

TABLE Va-c
Efficiency for standard two-compartment water splitting

TABLE Va

| %$H_2SO_4$ | %$Na_2SO_4$ | C | η observed |
|---|---|---|---|
| 4.90 | 10.14 | .824 | .591 |
| 6.98 | 15.92 | .777 | .589 |
| 0 | 25.00 | 0 | .971 |
| 2.30 | 24.37 | .241 | .920 |
| 4.43 | 23.06 | .435 | .850 |
| 7.52 | 21.70 | .669 | .706 |
| 10.68 | 23.04 | .804 | .577 |
| 13.95 | 21.73 | .964 | .381 |

TABLE Vb
Efficiency at 45°

| %$H_2SO_4$ | %$Na_2SO_4$ | C | η observed |
|---|---|---|---|
| 4.87 | 10.09 | .823 | .581 |
| 6.87 | 15.02 | .797 | .578 |
| 0 | 24.96 | 0 | .970 |
| 2.31 | 23.79 | .247 | .902 |
| 4.37 | 23.49 | .425 | .842 |
| 7.46 | 21.93 | .660 | .695 |
| 10.55 | 23.09 | .797 | .559 |
| 14.10 | 21.80 | .968 | .371 |

TABLE Vc
Efficiency at 35°

| %$H_2SO_4$ | %$Na_2SO_4$ | C | η observed |
|---|---|---|---|
| 4.72 | 10.23 | .801 | .539 |
| 6.75 | 15.08 | .787 | .532 |
| 0 | 24.85 | 0 | .972 |
| 2.22 | 24.05 | .236 | .903 |
| 4.27 | 23.61 | .415 | .809 |
| 7.36 | 22.00 | .653 | .656 |
| 10.61 | 23.24 | .796 | .517 |
| 13.97 | 21.87 | .961 | .341 |

Comparative Experiment 6

Application of multichamber two-compartment water splitting to aqueous $Na_2SO_4$

A comparison of a prior art two-compartment electrodialytic water splitter with a preferred

**0 096 239**

embodiment of the present invention systems for producing acidified $Na_2SO_4$ is made. Method 1 is a prior art two-compartment water slitter of Figure 2a operated in a batch recirculation mode from zero conversion to a final conversion. The conversion, C, is defined as:

$$C=\frac{2\times moles\ H_2SO_4}{moles\ H_2SO_4+moles\ Na_2SO_4}$$

A conversion of 1 therefore corresponds to a solution of $NaHSO_4$. Batch recirculation corresponds to an infinite number of feed and bleed stages. A continuous process employing three stages would be slightly less efficient. Method 2 involves feeding a solution of salt to the second compartment $A_2$ of the two acid compartments cell illustrated in Figure 5 with the output to the second compartment $A_2$ being fed to the first compartment $A_1$ as shown in Figure 5. For the purpose of calculation, it is assumed that the second compartment $A_2$ is operated at the conversion fed to the first compartment, $A_1$, and the first $A_1$ at the conversion of the final product.

Using the quadratic equation of Experiment 5, calculation of the average efficiency which would be observed to various conversions by the batch recirculation method and the efficiency observed for the two cation membrane cell illustrated in Figure 5 operated at various conversions was made for the three temperatures. The results are shown in Tables VI—VIII. These results at 50° are shown graphically in Figure 7.

The results indicate that at conversions above 50 percent, the two cation membrane cell of Figure 5 has significantly higher efficiency than the regular two-compartment cell. The two cation membrane cell is, however, somewhat more complex than the conventional two-compartment cell and would operate at a "somewhat" higher voltage. Whether the two cation membrane cell would have an advantage over an ordinary two-compartment cell could only be determined by detailed engineering analysis and use tests. This analysis has assumed that the same membrane is used for both the cation membranes in the two cation membrane cell. It may be advantageous to use a low resistance, substantially non-porous, water-swollen cation membrane or perhaps even an uncharged substantially non-porous, water-swollen membrane to separate the two acid compartments. A lower voltage drop might be obtained in such a system but no data is available as to the transport of $Na^+$, $H^+$, and $SO_4^=$ across such membranes.

TABLE VI

Comparison of calculated current efficiencies for conversion of $Na_2SO_4$ to $NaHSO_4$
at 35°C in cells of Figures 2a and 5

| Conversion (C) of $Na_2SO_4$ to $NaHSO_4$[a] | Calculated current efficiencies for conversion of $Na_2SO_4$ to $NaHSO_4$ | |
|---|---|---|
| $C^a$ | $\eta$ calc[b] | $\eta$ calc (2-shape)[c] |
| 0 | .970 | — |
| .101 | .960 | .969 |
| .200 | .947 | .968 |
| .301 | .929 | .965 |
| .400 | .908 | .959 |
| .500 | .883 | .949 |
| .600 | .852 | .932 |
| .700 | .815 | .905 |
| .800 | .771 | .864 |
| .900 | .717 | .801 |
| 1.000 | .650 | .706 |

[a]$C=2\times$moles of $H_2SO_4$/moles of $H_2SO_4+$moles of $Na_2SO_4$
[b]Batch Recirculation in Cell illustrated in Figure 2a
[c]Two Cation Membrane—Two Acid Compartment Cell of Figure 5.

14

**0 096 239**

TABLE VII

Comparison of calculated current efficiencies for conversion of $Na_2SO_4$ to $NaHSO_4$
at 45° in cells of Figures 2a and 5

| Conversion (C) of $Na_2SO_4$ to $NaHSO_4$ | Calculated current efficiencies | |
|---|---|---|
| $C^a$ | $\eta$ calc$^b$ | $\eta$ calc (2-stage)$^c$ |
| 0 | .963 | — |
| .10 | .959 | .962 |
| .20 | .951 | .962 |
| .30 | .939 | .962 |
| .40 | .922 | .960 |
| .50 | .901 | .955 |
| .60 | .875 | .945 |
| .70 | .842 | .928 |
| .80 | .802 | .897 |
| .90 | .752 | .844 |
| 1.00 | .690 | .760 |

$^a$C=2×moles of $H_2SO_4$/moles of $H_2SO_4$+moles of $Na_2SO_4$
$^b$Batch Recirculation in Cell Illustrated in Figure 1
$^c$Two Cation Membranes—Two Acid Compartment Cell of Figure 5

15

TABLE VIII
Comparison of calculated current efficiencies for conversion of $Na_2SO_4$ to
$NaHSO_4$ in cells of Figures 2a and 5 at 50°C

| Conversion (C) of $Na_2SO_4$ to $NaHSO_4$ | Current efficiencies calculated for Conversion of $Na_2SO_4$ to $NaHSO_4$ | |
|---|---|---|
| $C^a$ | $\eta$ calc$^b$ | $\eta$ calc$^c$ |
| 0 | .963 | — |
| .10 | .962 | .963 |
| .20 | .957 | .963 |
| .30 | .948 | .963 |
| .40 | .934 | .963 |
| .50 | .914 | .962 |
| .60 | .890 | .956 |
| .70 | .858 | .942 |
| .80 | .819 | .915 |
| .90 | .769 | .864 |
| 1.00 | .705 | .779 |

$^a$C=2×moles of $H_2SO_4$/moles of $H_2SO_4$+moles of $Na_2SO_4$
$^b$Batch Recirculation in Cell Illustrated in Figure 2a
$^c$Two Cation Membrane—Two Acid Compartment Cell of Figure 5

## Claims

1. A process for obtaining regenerated rayon spin bath material comprising alkali metal sulfate and sulfuric acid and generating alkali metal hydroxide from a spent rayon spin bath liquor comprising alkali metal sulfate, characterised in that said process is an electrodialytic process comprising the steps of:

a) feeding aqueous solution of said alkali metal sulfate to each acid compartment (A) of an electrodialytic water splitter (120, 220), the electrodialytic water splitter comprising at least one acid compartment (A) and at least one base compartment (B);

b) feeding liquid comprising water to each base compartment (B) of the electrodialytic water splitter (120, 220);

c) passing current through the electrodialytic water splitter (120, 220) to produce, in each acid compartment (A), a reaction product comprising said alkali metal sulfate and sulfuric acid and, in each base compartment (B), a reaction liquid comprising said alkali metal hydroxide; and,

d) recovering at least a portion of the reaction product from the electrodialytic water splitter (120, 220).

2. The process of Claim 1 wherein the electrodialytic water splitter is a two-compartment electrodialytic water splitter (120) comprised of a plurality of unit cells defining alternating acid (A) and base (B) compartments, each unit cell comprising both cation (124) and bipolar (122a) membranes.

3. The process of Claim 1 or Claim 2 wherein an average temperature of at least about 40°C is maintained in the electrodialytic water splitter (120, 220).

4. A process as claimed in any preceding claim wherein the electrodialytic water splitter is a three-compartment electrodialytic water splitter (220) comprised of a plurality of unit cells defining alternating base (B), acid (A) and salt (S) compartments, each unit cell comprising cation (224a), bipolar (222a) and anion (226) membranes, and further comprising the step of feeding a liquid comprising alkali metal sulfate to each salt compartment (S).

5. A process as claimed in Claim 2 wherein the alkali metal sulfate in the spent rayon spin bath liquor comprises between 10 and 32 weight percent of the liquid fed to the acid compartment.

6. A process as claimed in any preceding Claim wherein said aqueous solution is said spent bath liquor.

7. A process as claimed in any of Claims 1 to 5 wherein said alkali metal sulfate is sodium sulfate and prior to said steps a) to d), spent rayon spin bath liquor is treated to produce crystallized glauber salt therefrom; and the glauber salt is dissolved to form said aqueous solution, the concentration of alkali metal sulfate in the aqueous solution being between 15 and 32 weight percent of the aqueous solution.

8. The process of Claim 7 wherein the concentration of sulfuric acid in the reaction product is between about 9 and about 12 weight percent.

9. A process as claimed in any preceding Claim wherein between 25 and 50 weight percent of the alkali metal sulfate in the spent rayon spin bath liquor is converted to sulfuric acid.

10. A process as claimed in any of Claims 1 to 7 wherein an average temperature of at least 45°C is maintained in the electrodialytic water splitter (120, 220).

11. A process claimed in any of Claims 7 to 10 wherein the electrodialytic water splitter is a three-compartment electrodialytic water splitter (220) comprising alternating base (B), acid (A) and salt (S) compartments, and further comprising the steps of:

A neutralizing spent rayon spin bath liquor;

B filtering the neutralized liquor to obtain an aqueous product containing between 10 and 32 weight percent alkali metal sulfate and being substantially free of organic and inorganic impurities; and

C feeding the aqueous product to each salt compartment (S) of the three-compartment electrodialytic water splitter (220).


## Patentansprüche

1. Verfahren zum Herstellen von Alkalimetallsulfat und Schwefelsäure enthaltendem, regeneriertem Rayonspinnbad-material und zum Erzeugen von Alkalimetallhydroxid aus einer Alkalimetallsulfat enthaltenden, verbrauchten Rayonspinnbadflüssigkeit, dadurch gekennzeichnet, daß das Verfahren ein Elektroldialyseverfahren mit folgenden Schritten ist:

a) Eine wässerige Lösung des genannten Alkalimetallsulfats wird jedem Säureraum (A) eines elektrodialytischen Wassersplitters (120, 122) zugeführt, der mindestens einen Säureraum (A) und mindestens einen Basenraum (B) besitzt;

b) eine wässerige Flüssigkeit wird jedem Basenraum (B) des elektrodialytischen Wassersplitters (120, 220) zugeführt;

c) durch den elektrodialytischen Wassersplitter (120, 220) wird ein Strom geführt, um in jedem Säureraum (A) ein Reaktionsprodukt zu erzeugen, das das genannte Alkalimetallsulfat und die Schwefelsäure enthält, und um jedem Basenraum (B) eine das genannte Alkalimetallhydroxid enthaltende Reaktionsflüssigkeit zu erzeugen; und

d) mindestens ein Teil des Reaktionsproduktes wird aus dem elektrodialytischen Wassersplitter (120, 220) gewonnen.

2. Verfahren nach Anspruch 1, dadurch gekennzeichnet, daß der elektrodialytische Wassersplitter ein elektrodialytischer Zweiraum-Wassersplitter (120) ist, der eine Mehrzahl von Einheitszellen aufweist, die im Wechsel miteinander Säureräume (A) und Basenräume (B) bilden, wobei jede Einheitszelle eine kationenaktive Membran (124) und eine bipolare Membran (122a) enthält.

3. Verfahren nach Anspruch 1 oder 2, dadurch gekennzeichnet, daß in dem elektrodialytischen Wassersplitter (120, 220) eine mittlere Temperatur von mindestens etwa 40°C aufrechterhalten wird.

4. Verfahren nach einem der vorhergehenden Ansprüche, dadurch gekennzeichnet, daß der elektrodialytische Wassersplitter ein elektrolytischer Dreiraum-Wassersplitter (220) ist, der eine Mehrzahl von Einheitszellen besitzt, die im Wechsel miteinander Säureräume (A) und Salzräume (S) bilden, wobei jede Einheitszelle einen Basenraum (B), einen Säureraum (A) und einen Salzraum (S) enthält und eine kationenaktive Membran (224a), eine bipolare Membran (222a) und eine anionenaktive Membran (226) besitzt, sowie durch einen weiteren Schritt, in dem jedem Salzraum (S) eine alkalimetallsulfathaltige Flüssigkeit zugeführt wird.

5. Verfahren nach Anspruch 5, dadurch gekennzeichnet, daß das Alkalimetallsulfat in der verbrauchten Rayonspinnbadflüssigkeit 10 bis 32 Gew.% der dem Säureraum zugeführten Flüssigkeit ausmacht.

6. Verfahren nach einem der vorhergehenden Ansprüche, dadurch gekennzeichnet, daß die genannte wässerige Lösung die genannte Verbrauchte Badflüssigkeit ist.

7. Verfahren nach einem der Ansprüche 1 bis 5, dadurch gekennzeichnet, daß das genannte Alkalimetallsulfat Natriumsulfat ist, daß vor den Schritten a) bis d) verbrauchte Rayonspinnbandflüssigkzit zwecks Erzeugung von kristallinem Glaubersalz daraus behandelt wird und daß durch Auflösung des Glaubersalzes die genannte wässerige Lösung gebildet wird, wobei die Alkalimetallsulfatkonzentration in der wässerigen Lösung zwischen 15 und 32 Gew.-% der wässerigen Lösung beträgt.

8. Verfahren nach Anspruch 7, dadurch gekennzeichnet, daß die Schwefelsäurekonzentration des Reaktionsproduktes zwischen etwa 9 und etwa 12 Gew.% beträgt.

9. Verfahren nach einem der vorherghenden Ansprüche, darin daß 25 bis 50 Gew.% das in der verbrauchten Rayonspinnbadflüssigkeit enthaltendenen Alkalimetallsulfats in Schwefelsäure umgewandelt wird.

10. Verfahren nach einem der Ansprüche 1 bis 7, dadurch gekennzeichnet, daß in dem elektrolytischen Wassersplitter (120, 220) eine mittlere Temperatur von mindestens 45°C aufrechterhalten wird.

11. Verfahren nach einem der Ansprüche 7 bis 10, dadurch gekennzeichnet, daß der elektrodialytische Wassersplitter (220) ein elektrolytischer Dreiraum-Wassersplitter (220) ist, in dem Basenräume (B),

17

Säuräume (A) und Salzräume (S) im Wechsel aufeinanderfolgen, sowie gekennzeichnet, durch folgende Schritte:

A Verbrauchte Rayonspinnbadflüssigkeit wird neutralisiert;

B durch Filtrieren der neutralisierten Flüssigkeit wird ein wässeriges Produkt gewonnen, das 10 bis 32 Gew.% Alkalimetallsulfat enthält und im wesentlichen frei ist von organischen und anorganischen Verunreinigungen; und

C das wässerige Produkt wird jedem Salzraum des elektrolytischen Dreiraum-Wasserspalters (220) zugeführt.

## Revendications

1. Un procédé d'obtention de matériau de bain de filage pour rayonne régénéré comprenant un sulfate alcalin et de l'acide sulfurique et générant un hydroxyde alcalin à partir d'une liqueur de bain de filage pour rayonne épuisé comprenant un sulfate alcalin, caractérisé en ce que ledit procédé est un procédé électrodialytique comprenant les étapes suivantes:

a) alimenter une solution aqueuse dudit sulfate alcalin dans chaque compartiment acide (A) d'un dissociateur d'eau électrodialytique (120, 220), le dissociateur d'eau électrodialytique comprenant au moins un compartiment acide (A) et au moins un compartiment basique (B);

b) alimenter un liquide comprenant de l'eau dans chaque compartiment basique B du dissociateur d'eau électrodialytique (120, 220);

c) faire passer un courant à travers le dissociateur d'eau électrodialytique (120, 220) pour obtenir, dans chaque compartiment (A), un produit de réaction comprenant ledit sulfate alcalin et ledit acide sulfurique et, dans chaque compartiment basique (B), un liquide de réaction comprenant ledit hydroxyde alcalin; et,

d) récupérer au moins une portion du produit de réaction à partir du dissociateur d'eau électrodialytique (120, 220).

2. Le procédé de la revendication 1 dans lequel le dissociateur d'eau électrodialytique est un dissociateur d'eau électrodialytique à deux compartiments (120) constitué d'une pluralité de cellules élémentaires définissant des compartiments alternants acide (A) et basique (B), chaque cellule élémentaire comprenant à la fois des membranes cationique (124) et bipolaire (122a).

3. Le procédé de la revendication 1 ou de la revendication 2 dans lequel on maintient une température moyenne d'au moins environ 40°C dans la dissociateur d'eau électrodialytique (120, 220).

4. Un procédé selon l'une quelconque des revendications précédentes dans lequel le dissociateur d'eau électrodialytique est un dissociateur d'eau électrodialytique à trois compartiments (220) constitué d'une pluralité de cellules élémentaires définissant des compartiments alternants basique (B) acide (A) et de sel (S), chaque cellule élémentaire comprenant des membranes cationique (224a), bipolaire (222a) et anionique (226), et comprenant en outre l'étape d'alimenter un liquide comprenant un sulfate alcalin dans chacun des compartiments de sels (S).

5. Un procédé selon la revendication 2 dans lequel le sulfate alcalin dans la liqueur de bain de filage pour rayonne épuisée comprend entre 10 et 32 pour cent en poids du liquide alimenté dans le compartiment acide.

6. Un procédé selon l'une quelconque des revendications précédentes dans lequel ladite solution aqueuse est ladite liqueur de bain épuisée.

7. Un procédé selon l'une quelconque des revendications 1 à 5 dans lequel ledit sulfate alcalin est le sulfate de sodium et dans lequel avant lesdites étapes a) à d) on traite la liqueur de bain de filage pour rayonne épuisée pour en obtenir du sel de Glauber cristallisé; et le sel de Glauber est dissous pour former ladite solution aqueuse, la concentration en sulfate alcalin de la solution aqueuse étant comprise entre 15 et 32 pour cent en poids de la solution aqueuse.

8. Le procédé de la revendication 7 dans lequel la concentration en acide sulfurique du produit de réaction est comprise entre environ 9 et environ 12 pour cent en poids.

9. Un procédé selon l'une quelconque des revendications précédentes dans lequel entre 25 et 50 pour cent en poids du sulfate alcalin dans la liqueur de bain de filage pour rayonne épuisée est transformé en acide sulfurique.

10. Un procédé selon l'une quelconque des revendications 1 à 7 dans lequel on maintient une température moyenne d'au moins 45°C dans la dissociateur d'eau électrodialytique (120, 220).

11. Un procédé selon l'une quelconque des revendications 7 à 10 dans lequel le dissociateur d'eau électrodialytique est un dissociateur d'eau électrodialytique à trois compartiments (220) comprenant des compartiments alternants basique (B), acide (A) et de sel (S) et comprenant en outre les étapes suivantes:

a) neutraliser la liqueur de bain de filage pour rayonne épuisée;

b) filtrer la liqueur neutralisée pour obtenir un produit aqueux contenant entre 10 et 32 pour cent en poids de sulfate alcalin et étant sensiblement dépouvu d'impuretés organiques et minérales; et

c) alimenter le produit aqueux dans chaque compartiment de sel (S) du dissociateur d'eau électrodialytique à trois compartiments (220).

FIG-1

# FIG-2a

# FIG-2b

# FIG-2c

FIG-3

FIG-4

# FIG-5

## FIG-6

CURRENT EFFICIENCY VS. TEMPERATURE
FOR ANION MEMBRANE
204-UZL-386 IN THREE-
COMPARTMENT CELL

H₂SO₄

HC1

OVERALL η

0.8

0.7

0.6

0.5

0.4

26    30    34    38    42    46    50

AVERAGE TEMPERATURE (°C)

## FIG-7

2-ACID COMPT.
2-COMPARTMENT
EDWS OF
FIG-5

OVERALL η

1.0

0.9

0.8

0.7

0.6

0.5

BATCH
RECIRCULATION
IN PRIOR ART
EDWS OF FIG-2a

0    .1    .2    .3    .4    .5    .6    .7    .8    .9    1.0

CONVERSION